# EUROPÄISCHE PATENTSCHRIFT

(11) **EP 1 999 943 B1**
(45) Veröffentlichungstag und Bekanntmachung des Hinweises auf die Patenterteilung: **10.11.2010**
(21) Anmeldenummer: 07726427.3
(22) Anmeldetag: 20.02.2007
(51) Int. Cl.: H04M 7/00

(54) **VERFAHREN ZUR LOKALISIERUNG UND ORTBEZOGENEN VERMITTLUNG EINES MOBILEN VOICE-OVER-IP-TEILNEHMERS ZU EINEM NOTRUFZENTRUM**
METHOD FOR LOCALIZATION AND LOCATION-RELATED CONNECTION OF A MOBILE VOICE-OVER-IP SUBSCRIBER TO AN EMERGENCY CALL STATION
PROCÉDÉ DE LOCALISATION ET DE TRANSMISSION, EN FONCTION D'UN LIEU, D'UN ABONNÉ MOBILE VOIX SUR IP VERS UN CENTRE D'APPEL D'URGENCE

(30) Priorität: 22.03.2006 DE 102006013218
(43) Veröffentlichungstag der Anmeldung: 10.12.2008
(73) Patentinhaber: Nokia Siemens Networks GmbH & Co. KG, 81541 München (DE)
(72) Erfinder: BEINROTH, Achim, 12526 Berlin (DE); ERFURT, Frank, 14532 Kleinmachnow (DE)
(86) Internationale Anmeldenummer: PCT/EP2007/051606
(87) Internationale Veröffentlichungsnummer: WO 2007/107421

(56) Entgegenhaltungen:
- WO-A-2005/077054
- US-A1- 2004 190 497
- US-A1- 2005 190 892

## Beschreibung

Die Erfindung betrifft ein Verfahren zur Lokalisierung und ortsbezogenen Vermittlung eines Teilnehmers in einem Voice-over-IP-Netz zu einem Notrufzentrum, wobei der Teilnehmer zeitweise auch an einem anderen Standort als einer Heimatadresse im Voice-over-IP-Netz registriert sein kann.

Unter Voice-over-IP wird im landläufigen Sinne Telefonieren über ein Computernetzwerk verstanden, welches wie z.B. das Internet auf der Grundlage des so genannten Internetprotokolls oder kurz IP-Protokoll basiert. Bei Voice-over-IP werden die Sprachsignale digitalisiert und in Form von Datenpaketen über ein so genanntes paket-orientiertes Netz übertragen, anstatt über durchgeschaltete Leistungen wie in einem "klassischen" leitungsvermittelnden Telefonnetzes wie z.B. dem so genannten Festnetz oder einem Mobilfunknetz.

Protokolle, mit deren Hilfe digitalisierte Sprachsignale in IP-basierten Computernetzen weitergeleitet werden, werden allgemein auch Voice-over-IP-Protokolle genannt. Die Computernetze, in denen Voice-over-IP-Telefonie ermöglicht wird, können auch als Voice-over-IP-Netze bezeichnet werden.

Voice-over-IP-Telefonie kann außerdem nur innerhalb eines IP-basierten Computernetzes in einem Unternehmen oder einer Institutionen (z.B. in einem Local Area Network oder in einem Intranet) oder auch im öffentlichen Internet angewendet werden. Die Anwendung im öffentlichen Internet wird auch als Internettelefonie im engeren Sinn bezeichnet. Für einen Teilnehmer besteht allerdings kaum ein Unterschied zwischen dem Telefonieren in einem Voice-over-IP-Netz und dem Telefonieren in einem herkömmlichen Telefonnetze wie beispielsweise dem Festnetz oder einem Mobilfunknetz.

Ein Telefongespräch in einem Voice-over-IP-Netz wird genauso wie z.B. ein Telefonat im Festnetz oder in einem Mobilfunknetz in zwei Vorgänge unterteilt: einem Aufbau der Verbindung und einer Übertragung des Gespräches. Eingehend Telefonanrufe werden beispielsweise - genauso wie bei der klassischen Telefonie - zum Endgerät eines angerufenen Voice-over-IP-Teilnehmers weitergeleitet.

Allerdings kann die Voice-over-IP-Telefonie von jedem Zugang zu einem Voice-over-IP-Netz (z.B. Intranet, unternehmensinternen IP-basierten LAN) bzw. die Internet-Telefonie von jedem Internetanschluss aus durch Einwahl auf einem im Internet verfügbaren Dienstrechner - einem so genannten Server, welcher vom einem Internet-Telefonie-Anbieter betrieben wird, genutzt werden. Dadurch ist eine vordefinierte Zuordnung einer Teilnehmer-Identifikation wie z.B. einer Teilnehmer-Rufnummer zu einer bestimmten geografischen Adresse - beispielsweise aus Ort, Strasse, Hausnummer, etc. bestehend - bzw. zu einem bestimmen Standort nicht mehr gegeben.

Weiterhin ist es bei einem so genannten Notruf erforderlich, den Standort bzw. die geografische Adresse eines notrufenden Teilnehmers zu kennen. Als Notruf wird dabei ein Signal bezeichnet, welches meist via Telekommunikationsendgerät abgesetzt wird, um professionelle Hilfe wie beispielsweise Rettung, Feuerwehr, Polizei, etc. zu erreichen. Meist können diese Hilfseinrichtungen über spezielle Rufnummern - so genannte Notrufnummern - erreicht werden.

Notrufnummern sind dabei Sondernummern im so genannten Nummerierungsplan, durch welchen die Summe aller Vorschriften zum Format und zur Bezeichnung von Wählziffern und Ziffernkombinationen in Telekommunikationsnetzen festgelegt wird. Üblicherweise sind diese Notrufnummern dreistellig und innerhalb eines Landes, für welches ein bestimmter Nummerierungsplan definiert ist, gültig. Notrufnummern können daher von Land zu Land unterschiedlich sein. Zusätzlich gibt es in der Europäischen Union eine so genannte Euronotrufnummer - die Ziffernkombination 1-1-2, mit deren Hilfe in jedem Land professionelle Hilfsdienste wie z.B. Rettung, Feuerwehr oder Polizei erreicht werden können. Die Euronotrufnummer wird auch als Notrufnummer in Mobilfunknetzen eingesetzt. Innerhalb eines nationalen Gebietes können Hilfsdienste wie z.B. Rettung, Feuerwehr oder Polizei ebenfalls über die nationalen Notrufnummern (z.B. in Deutschland 1-1-0 für die Polizei, 1-1-2 für Rettung oder Feuerwehr) erreicht werden.

Zusätzlich kann es weitere Hilfsdienste wie beispielsweise ärztlicher Notdienst, Pannenhilfsdienste, Automobilfahrerclubs, etc. geben, welche über spezielle Rufnummern - oft ebenfalls dreistellige und im Gebiet eines Landes einheitliche Rufnummern kontaktiert werden können.

Da Notrufsnummer bzw. Rufnummern für andere Hilfsdienste meist für das gesamte Gebiet eines Landes einheitlich sind bzw. in Mobilfunknetzen der Euronotruf, der im gesamten Gebiet der Europäischen Union gültig ist, verwendet wird, ist es bei einem Notruf erforderlich, den Standort des notrufenden Teilnehmers zu kennen, damit dieser zu einem nächstgelegenen bzw. zuständigen Notrufzentrum verbunden werden kann. Für eine weitere Hilfeleistung ist zusätzlich eine Übermittlung einer Information über den Standort (z.B. Ort, Strasse, Hausnummer, etc.) des notrufenden Teilnehmers an dieses Notrufzentrum notwendig.

Nach derzeit geltendem Recht ist beispielsweise in Deutschland oder Österreich ein Betreiber eines öffentlichen Telefonnetzes bzw. ein Anbieter von Telekommunikationsdienstleistungen für die Öffentlichkeit dazu verpflichtet, eine Herstellung von Verbindungen zu Notrufnummer und damit das Routing zu den jeweiligen Notrufzentren zu gewährleisten. Für die Übermittlung der Standortdaten gilt z.B. derzeit in Österreich, dass von einem Telekommunikationsnetz-Betreiber über Stammdaten sowie Standortdaten nur auf Verlangen des Betreibers eines Notrufdienstes Auskunft gegeben werden muss. Standortdaten sind dabei jene Daten, welche in einem Kommunikationsnetz verarbeitet werden und von welchen der Standort eines Telekommunikationsendgerätes eines Teilnehmers an einem öffentlichen Kommunikationsdienst angebeben werden muss.

Im Festnetz kann für die Übermittlung des Notrufs zum nächstgelegenen bzw. zuständigen Notrufzentrum ursprungsabhängiges Routing eingesetzt werden. Dabei wird aus der Rufnummer des Teilnehmers das nächstgelegene bzw. zuständige Notrufzentrum ermittelt und diese Rufnummer dann an das Notrufzentrum weitergeleitet. Der Standort des notrufenden Teilnehmers wird dann beispielsweise mit Hilfe der übertragenen Rufnummer des Teilnehmers festgestellt, da die Rufnummer oft z.B. vom Netzbetreiber für Verrechnungszwecke mit der Adresse des Teilnehmers und damit mit seinem Standort gekoppelt wird.

In Mobilfunknetzen wird beispielsweise das Routing des Notrufs zum nächstgelegenen bzw. zuständigen Notrufzentrum anhand jener Funkzelle durchgeführt, zu welcher der notrufende Teilnehmer mit seinem Endgeräte eine Verbindung hergestellt hat. Mit Unterstützung des Netzbetreibers kann dann in der Notrufzentrale der ungefähre Standort des notrufenden Teilnehmers z.B. mit Hilfe der Position der Funkzelle fest-gestellt werden. Eine genauere Standortbestimmung des not-rufenden Teilnehmers in einem Mobilfunknetz kann beispiels-weise durch Benutzung von Informationen über Signallaufzeit und Empfangsfeldstärke, sowie durch Verwendung neuer Techniken wie das Satellitennavigationssystem Global Positioning System (GPS) bzw. durch Assisted GPS (A-GPS) erreicht werden.

Für Voice-over-IP-Netze gilt zwar nach dem geltenden Recht ebenfalls, dass die Herstellung von Verbindungen zu Notrufnummer und das Routing zum jeweiligen Notrufzentrum gewährleistet sein müssen. Aber für die Übermittlung der Standortdaten gibt es zurzeit keine Regelung. In Österreich gilt beispielsweise, dass sofern im Netz des Betreibers keine Standortdaten verarbeitet werden - wie das beispielsweise in Voice-over-IP-Netzen der Fall sein kann, keine gesetzliche Verpflichtung für den Betreiber besteht, Standortdaten an den Betreiber eines Notrufdienstes zu übermitteln.

Daher gibt es für Voice-over-IP-Netze in Europa derzeit Bestrebungen - ähnlich wie in den USA - Bestimmungen zu erlassen, dass auch Voice-over-IP-Teilnehmer unter den jeweiligen Notrufnummern das nächstgelegene bzw. zuständige Notrufzentrum erreichen, wobei an dieses auch Informationen über den Standort des notrufenden Teilnehmers bzw. seines Endgerätes übermittelt werden sollen. Daher ist es erforderlich, im Voice-over-IP-Netz eine Zuordnung einer Teilnehmer-Identifikation (z.B. Teilnehmer-Rufnummer, etc.) zu Standortdaten zur Verfügung zu stellen.

Bei Voice-over-IP-Netzen kann zwischen so genannten nicht mobilen Voice-over-IP-Teilnehmern und so genannten mobilen Voice-over-IP-Teilnehmern unterschieden werden. Von nichtmobilen Voice-over-IP-Teilnehmern wird immer der gleiche Zugang (z.B. Heimarbeits-platz, fixer Büroarbeitsplatz) zum Voice-over-IP-Netz bzw. zum Internet für die Nutzung der Voice-over-IP- bzw. Internet-Telefonie verwendet. Die Adresse (z.B. Ort, Strasse, Hausnummer, etc.) dieses Zugangs kann auch als Heimatadresse des Teilnehmers bezeichnet werden.

Für diese nicht mobilen Teilnehmer kann bei Notrufen ähnlich wie im Festnetz ursprungsabhängiges Routing eingesetzt werden, da der Standort des Teilnehmers meist bekannt ist und nicht geändert wird. Hierzu werden Teilnehmerdaten wie z.B. Teilnehmer-Identifikation oder -Rufnummer im Voice-over-IP-Netz statisch mit Routinginformationen verknüpft, um auf diese Weise das nächstgelegene bzw. zuständige Notrufzentrum zu erreichen. Zur Lokalisierung des Teilnehmers kann dem Notrufzentrum eine Teilnehmer-Identifikation (z.B. Teilnehmer-Rufnummer) übermittelt werden, anhand welcher im Notrufzentrum beispielsweise durch eine Abfrage einer vom Netz-Betreiber versorgten Datenbank die Standortdaten des notrufenden Teilnehmers eruiert werden.

Im Gegensatz dazu sind mobile Voice-over-IP-Teilnehmer zeitweise für die Nutzung der Voice-over-IP oder Internet-Telefonie auch an anderen Standorten als ihrer Heimatadresse registriert. Das bedeutet, von ihnen werden beispiels-weise neben einer Heimatadresse (z.B. Büroarbeitsplatz, Heimarbeitsplatz, etc.) auch andere Zugänge zum Voice-over-IP-Netz bzw. Internet genutzt - wie beispielsweise ein Zweitbüro an einem anderen Standort eines Unternehmens, Internetzugang in einem Hotel, teilweises Arbeiten an einem Heimarbeitsplatz, etc.).

Durch zumindest zeitweise Nutzung verschiedener Zugänge zum Voice-over-IP bzw. Internet ist eine feste Zuordnung zwischen einer Teilnehmer-Identifikation wie z.B. einer Teilnehmer-Rufnummer zu einem bestimmten Standort nicht mehr gegeben und im Voice-over-IP-Netz sind damit keine Standortdaten des mobilen Voice-over-IP-Teilnehmers verfügbar. Daher kann derzeit bei Notrufen ursprungsabhängiges Routing nur bedingt eingesetzt und eine Lokalisierung des notrufenden Voice-over-IP-Teilnehmers im Notrufzentrum nur teilweise durchgeführt werden.

Generelle Ansätze dies bezuglich sind aus WO 2005/077054 A, US 2005/190892 A1, sowie US 2004/190497 A1 bekannt.

Der vorliegenden Erfindung liegt daher die Aufgabe zugrunde, ein Verfahren anzugeben, durch welches auf einfach Weise Informationen für ein ortsbezogenes Weiterleiten von Notrufen und für die Lokalisierung eines Voice-over-IP-Teilnehmers zur Verfügung gestellt werden.

Die Lösung der Aufgabe erfolgt durch ein Verfahren der eingangs angegebenen Art, wobei das Voice-over-IP-Netz eine Adressdatenbank umfasst, in der Adressen mit einer ortsbezogenen Nummer indiziert sind, dann mit Hilfe eines in der Adressdatenbank abgelegten, vordefinierten Adressbereiches eine Adresse des Standorts eines Teilnehmers aktualisiert wird und dann ein Notruf anhand der ortsbezogenen Nummer an ein zugeordnetes Notrufzentrum geroutet wird. Die ortsbezogene Nummer und Daten des Teilnehmers werden daraufhin an das zugeordnete Notrufzentrum übermittelt und dann wird im Notrufzentrum mit Hilfe der ortsbezogenen Nummer der aktuelle Standort des notrufenden Teilnehmers durch eine Abfrage der Adressdatenbank im Voice-over-IP-Netz ermittelt.

Der Hauptaspekt der erfindungsgemäß vorgeschlagene Lösung besteht darin, dass auf einfache Weise und ohne große Änderungen im Voice-over-IP-Netz bzw. an Schnittstellen zwischen dem Voice-over-IP-Netz und anderen Netzen (z.B. einem Festnetz, etc.) ortsbezogene Informationen für Voice-over-IP-Teilnehmer zum ortsabhängigen Weiterleiten von Notrufen bzw. zum Bestimmen des aktuellen Standortes eines Voice-over-IP-Teilnehmers zur Verfügung gestellt werden. Im Voice-over-IP-Netz wird zu diesem Zweck eine Adressdatenbank eingeführt, in welche ein vordefinierter Adressbereich bzw. ein gültiges Adressverzeichnis importiert wird, in dem z.B. Adressdaten des vom Voice-over-IP-Netz versorgten geografischen Gebietes enthalten sind und welches gegebenenfalls periodisch aktualisiert wird, um auch beispielsweise Änderungen durch z.B. Umbenennungen von Strassen oder Änderungen bei Hausnummer oder Netz-Erweiterungen zur Verfügung zu stellen. Die in der Datenbank gespeicherten Adressen werden dann über eine ortsbezogene Nummer indiziert. Diese ortsbezogene Nummer wird dann beispielsweise als Eintrag bei den Teilnehmerdaten z.B. im Softswitch abgelegt und somit als Referenz auf den aktuellen Standort des Voice-over-IP-Teilnehmers eingesetzt. Die vorgeschlagene Lösung kann damit ohne größere Beeinflussung der Performanz bei Anrufsabwicklung in bestehende Netzelemente (z.B. Softswitch) des Voice-over-IP-Netzes eingebracht werden.

Es ist vorteilhaft, wenn die ortsbezogene Nummer über eine Mapping-Tabelle mit Informationen für die Weiterleitung zum jeweils zugeordneten Notrufzentrum verknüpft wird. Durch ein derartiges Mapping beispielsweise auf in den Netzelementen (z.B. Softswitch, Mediagateway, etc.) verfügbare RoutingInformationen wird der Aufbau eines Notrufes kaum verzögert, da aus der Adressdatenbank nur die aktuelle ortsbezogene Nummer eines Teilnehmers abgefragt werden muss und ein Zugriff auf die Routing-Information über die Mapping-Tabelle ausgeführt wird.

Ein weiterer mit der Erfindung erzielbarer Vorteil besteht insbesondere auch darin, dass als Vorinitialisierung die ortsbezogenen Nummer der Heimatadresse des Teilnehmers eingetragen wird. Die Heimatadresse ist dabei üblicherweise jene Adresse, an welcher ein Teilnehmer hauptsächlich im Voice-over-IP-Netz registriert ist. Meist wird diese Adresse bereits vom Betreiber des Voice-over-IP-Netzes für Verrechnungszwecke verwendet und ist daher verfügbar.

Es empfiehlt sich des Weiteren, dass eine Aktualisierung der Adresse des jeweilig aktuellen Standortes des Teilnehmers über einen World-Wide-Web-Oberfläche durchgeführt wird. Da insbesondere von einem mobilen Voice-over-IP-Teilnehmer für die Nutzung der vom Voice-over-IP-Netz zur Verfügung gestellten Dienste oft ein Zugang zum Internet benutzt wird und das World-Wide-Web ein vom Internet zur Verfügung gestellter Dienst ist, kann vom Teilnehmer auf einfache Weise bei einer Einwahl in das Voice-over-IP-Netz der jeweils aktuelle Standort bekannt gegeben werden - beispielsweise durch Auswahl der Adresse der aktuellen Standortes aus einer durch eine World-Wide-Web-Anwendung angebotenen Adressliste, die auf dem in der Adressdatenbank vordefinierten Adressbereich basiert. Durch die Eingabe des aktuellen Standortes wird dann bei den Daten des Teilnehmers eine ortsbezogene Nummer als Referenz auf die Adresse des aktuellen Standortes eingetragen. Der aktuelle Standort des Teilnehmers kann damit bei einem Notruf durch diese abgespeicherte ortsbezogene Nummer ermittelt werden.

Bei einer bevorzugten Fortbildung der Erfindung wird die eingegebene Adresse des jeweilig aktuellen Standortes des Teilnehmers mit einer Gültigkeitsdauer versehen, sofern diese von der Heimatadresse unterschiedlich ist. Auf diese Weise wird dem Teilnehmer ein neuerliches Aktualisieren der Standortadresse erspart, wenn z.B. der Zugang zum Voice-over-IP-Netz vom Teilnehmer wieder an Heimatadresse vorgenommen wird. Denn nach Ablauf der Gültigkeitsdauer kann die in den Daten des Teilnehmers gespeicherte ortbezogene Nummer beispielsweise wieder auf jene ortbezogene Nummer, durch welche die Heimatadresse indiziert wird, zurückgesetzt werden.

Es ist außerdem günstig, wenn periodisch eine Bestätigung der Adresse des jeweilig aktuellen Standortes des Teilnehmers gefordert wird. Damit wird auf einfache Weise sichergestellt, dass immer die Adresse des aktuellen Standortes des Voice-over-IP-Teilnehmers für Weiterleitung von Notrufen bzw. für seine Lokalisierung im Voice-over-IP-Netz verfügbar ist.

Zweckmäßig wird die Adressdatenbank zentral oder dezentral im Voice-over-IP-Netz bereitgestellt. Die Adressdatenbank kann zentral im Voice-over-IP-Netz zur Verfügung gestellt werden, wodurch die Aktualisierung und Wartung des vordefinierten Adressbereiches auf einfache Weise durchgeführt werden kann. Andererseits kann die Adressdatenbank auch dezentral gestaltet sein, wobei z.B. auf jedem vermittelnden Netzelement (z.B. Softswitch) die gesamte Datenbank bereitgestellt wird, welche dann vom jeweiligen Netzelement für das Routing der Notrufe (z.B. Abfrage der ortsbezogenen Nummer in den Daten eines Teilnehmers) zu den jeweils zugeordneten Notrufzentren benutzt wird.

Eine vorteilhafte Ausgestaltung der Erfindung sieht vor, dass die ortsbezogene Nummer mittels einer SIP-Schnittstelle zu einem Mediagateway in einem P-Access-Network-Info-Header gemäß RFC 3455 übertragen wird. Das so genannte Session Initiation Protocol SIP wurde von der IETF (Internet Engineering Task Force) entwickelt. Es definiert ein Signalisierungsprotokoll zum Aufbau, Modifizieren und Beenden von Sitzungen mit zwei oder mehreren Teilnehmern und dient ebenfalls der Übertragung von Echtzeitdaten über paketorientierte Netze wie z.B. dem Vermitteln von Sprache über IP-Netze. Für den Übergang zu einem anderen Netz - wie z.B. einem herkömmlichen Telekommunikationsnetz wie dem Festnetz - werden so genannte Vermittlungsrechner oder Mediagateways eingesetzt. Das Mediagateway ist dabei einerseits mit dem Voice-over-IP-Netz und andererseits mit dem anderen Telekommunikationsnetz, an welches z.B. das Notrufzentrum angeschlossen ist, verbunden. Vom Mediagateway werden dann die Anfragen aus dem Voice-over-IP-Netz beispielsweise über eine SIP-Schnittstelle empfangen, wobei diese Schnittstelle durch einen so genannten Request for Comment RFC - dem RFC3455 - der IETF definiert sein kann. Diese Anfragen werden dann vom Mediagateway in das andere Telekommunikationsnetz weitergeleitet. Die Verwendung der durch den RFC3455 definierten SIP-Schnittstelle bietet den Vorteil, dass diese bereits definierte Schnittstelle nur um einen Parameter für die ortsbezogene Nummer erweitert werden muss.

Es ist günstig, wenn die ortsbezogene Nummer vom Mediagateway auf einen ISUP-Parameter "Location Number" für eine Weiterleitung zum jeweiligen Notrufzentrum umgesetzt wird. Für die Weiterleitung des Notrufes in das andere Telekommunikationsnetz - z.B. das Festnetz, welches als Public Switched Telephone Network oder leitungsvermittelndes Telefonnetz ausgeführt ist, muss der Parameter für die ortsbezogene Nummer in einen Parameter eines in diesem Netz verwendeten Signalisierungsprotokolls umgesetzt werden. Im Festnetz wird als Signalisierungssystem beispielsweise das durch die ITU-T standardisierte, so genannte Signaling System No.7 eingesetzt, bei dem für die Nutzung von Diensten und Dienstmerkmalen im ISDN der so genannte ISDN User Part oder ISUP verwendet wird. Im ISUP wird ein Parameter "Location Number" zur Verfügung gestellt, welcher damit auf einfache Weise für die Weiterleitung der ortsbezogenen Nummer z.B. im Festnetz zum Notrufzentrum verwendet werden kann.

Vorzugsweise wird die ortsbezogene Nummer in einem Format der Empfehlung E.164 in der Adressdatenbank abgelegt. Die Empfehlung E.164 der ITU-T gilt als Empfehlung für einen Nummerierungsplan, wobei ein Nummerierungsplan die Summe aller Vorschriften zum Format und zur Bedeutung von Wählziffern und Ziffernkombinationen in Telekommunikationsnetzen umfasst. Die Empfehlung E.164 der ITU-T wurde insbesondere mit Blick auf ISDN entwickelt. Von ihr werden max. 15 plus 40 ISDN-Subadressen zugelassen. Wird die ortsbezogene Nummer nach den Empfehlungen der E.164 gestaltet, so kann sie auf einfache Weise von Telekommunikationsnetze, in welchen diese ITU-T-Empfehlung umgesetzt ist, übertragen und ausgewertet werden.

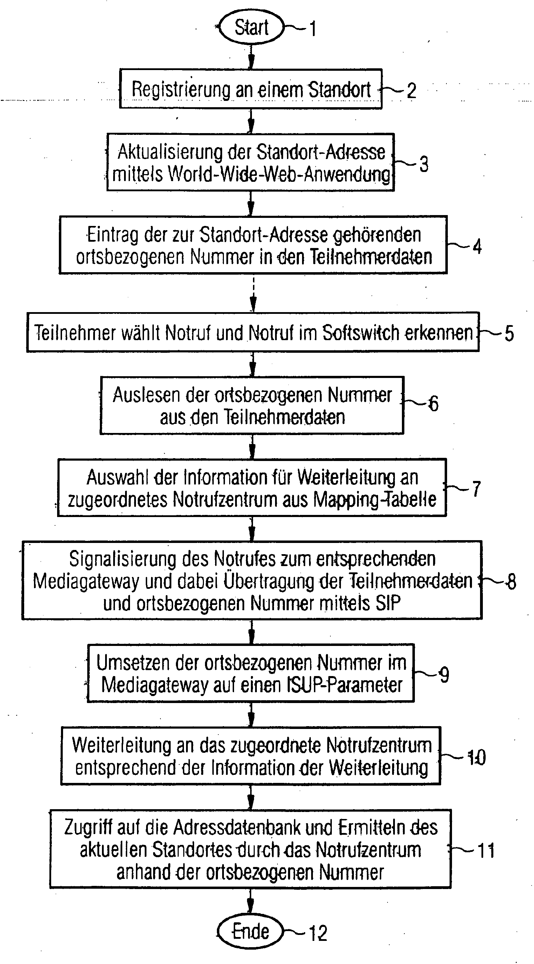

Die Erfindung wird nachfolgend in beispielhafter Weise unter Bezugnahme auf die beigefügte Figur näher erläutert. Es zeigt Figur 1, den schematischen Ablauf des erfindungsgemäßen Verfahrens.

Das erfindungsgemäße Verfahren wird mit einem Startschritt 1 begonnen. In einem zweiten Verfahrschritt 2 wird von einem Voice-over-IP-Teilnehmer eine Registrierung an einem Zugang zu einem Voice-over-IP-Netz an einem Standort durchgerührt, der von einer Heimatadresse abweichen kann, um vom Voice-over-IP-Netz zur Verfügung gestellte Dienste wie z.B. IP-Telefonie zu nutzen. Die Heimatadresse ist dabei jener Standort, an welchem vom Voice-over-IP-Teilnehmer hauptsächlich das Voice-over-IP-Netz bzw. vom ihm zur Verfügung gestellte Dienste benutzt werden. Die Heimatadresse ist außerdem jene Adresse, welche als vorinitialisierte Adresse für den Standort des Teilnehmers im Voice-over-IP-Netz eingetragen ist.

In einem dritten Verfahrenschritt 3 wird vom Voice-over-IP-Teilnehmer die Aktualisierung der Standort-Adresse durchgeführt. Dazu kann dem Voice-over-IP-Teilnehmer beispielsweise von einem V.oice-over-IP-Andieter eine World-Wide-Web-Anwendung zur Verfügung gestellt werden, mit deren Hilfe dem Voice-over-IP-Teilnehmer z.B. Adresse - z.B. bestehend aus Ort, Strasse, Hausnummer, etc. - aus einer Adressdatenbank im Voice-over-IP-Netz präsentiert werden. Die Adressdatenbank ist im Voice-over-IP-Netz untergebracht und umfasst dabei beispielsweise einen definierten Adressraum von einem geografischen Gebiet, welches vom Voice-over-IP-Netz des Voice-over-IP-Anbieters versorgt wird. Die Adressen in dieser Adressdatenbank werden außerdem durch eine ortsbezogene Nummer beispielsweise im E.164-Format indiziert. Vom Voice-over-IP-Teilnehmer kann dann über die World-Wide-Web-Anwendungen die Adresse seines aktuellen Standortes ausgewählt werden. Danach wird z.B. mittels eines so genannten Web-Servers in einem vierten Verfahrensschritt 4 die zur Adresse des aktuellen Standortes gehörende ortsbezogene Nummer aus der Adressdatenbank ausgelesen und in Daten des Teilnehmers (z.B. Teilnehmer-Identifikation, etc.), welche auf einem vermittelnden Netzelement wie z.B. einem Softswitch hinterlegt sind, gespeichert.

Wird nun in einem fünften Verfahrensschritt 5 vom Voice-over-IP-Teilnehmer ein Notruf bzw. eine Notrufnummer gewählt, so wird dieser Notruf zuerst im vermittelnden Netzelement - z.B. im Softswitch anhand der gewählten Rufnummer erkannt. In einen sechsten Verfahrenschritt 6 wird dann die in den Teilnehmerdaten am Softswitch hinterlegte ortsbezogene Nummer ausgelesen, durch welche die Adresse des aktuellen Standortes des Teilnehmers referenziert wird. In einem siebten Verfahrensschritt 7 werden mit Hilfe der ortsbezogenen Nummer aus einer Mapping-Tabelle, die z.B. am vermittelnden Netznetzelement (z.B. Softswitch) abgelegt ist, Informationen zur Weiterleitung des Notrufes zu einem zugeordneten Notrufzentrum - beispielsweise dem nächstgelegenen Notrufzentrum - ermittelt.

Da Notrufzentren üblicherweise außerhalb eines Voice-over-IP-Netzes gelegen sind bzw. an andere Telekommunikationsnetze wie z.B. das Festnetz angeschlossen sind, wird für den Übergang zwischen dem Voice-over-IP-Netz und einem anderen Telekommunikationsnetz ein so genannter Vermittlungsrechner oder ein Mediagateway eingesetzt. Vom Mediagateway werden dann Anrufe aus dem Voice-over-IP-Netz, welche in Signalisierungsprotokollen des Voice-over-IP-Netzes wie beispielsweise SIP empfangen werden, in das andere Telekommunikationsnetz umgewandelt, wobei Signalisierungsprotokoll des anderen Telekommunikationsnetzes - z.B. ISUP im Festnetz - für die Signalisierung eingesetzt werden.

In einem achten Verfahrensschritt 8 wird daher der Notruf zu einem der Weiterleitungsinformation aus der Mapping-Tabelle entsprechenden Mediagateway signalisiert. Dabei werden die Teilnehmerdaten sowie die ortsbezogenen Nummer mit Hilfe des Signalisierungsprotokolls - beispielsweise SIP - übertragen. Die ortsbezogene Nummer kann dabei als Parameter z.B. in einem P-Access-Network-Info-Header entsprechend dem RFC 3455 der IETF abgelegt sein.

In einem neunten Verfahrenschritt 9 wird dann vom Mediagateway die ortsbezogene Nummer auf einen Parameter im Signalisierungsprotokoll des anderen Telekommunikationsnetzes umgesetzt. Dazu kann beispielsweise bei Einsatz von ISUP der ISUP-Parameter "Location Number" verwendet werden. In einem zehnten Verfahrenschritt 10 wird dann der Notruf gemeinsam mit den Daten des Teilnehmers (z.B. Teilnehmer-Identifikation) und der ortsbezogenen Nummer entsprechend der aus der Mapping-Tabelle stammenden Information für die Weiterleitung, welche ebenfalls an das Mediagateway gesendet wurde, im anderen Telekommunikationsnetz zum zugeordneten Notrufzentrum weitergeleitet.

In einem elften Verfahrensschritt 11 wird dann auf die Adressdatenbank im Voice-over-IP-Netz zugegriffen, um den Standort des notrufenden Teilnehmers abzufragen. Dabei wird die mit dem Notruf übertragene, ortsbezogenen Nummer als Datenbankschüssel verwendet, um die Adresse des Standortes aus der Datenbank auszulesen. Sollte die ortsbezogene Nummer - z.B. durch Störungen in einem der an der Übertragung des Notrufes beteiligten Telekommunikationsnetze, durch Probleme bei der Umsetzung am Mediagateway, etc. - im Notrufzentrum nicht verfügbar sein, so bleibt die Möglichkeit erhalten, beispielsweise über die Teilnehmer-Identifikation bzw. -Rufnummer im Voice-over-IP-Netz vorhandene Datenbanken z.B. für Verrechnungszweck, für die Administration von Teilnehmern, etc. oder die Adressdatenbank nach statischer Adressinformation - wie beispielsweise der Heimatadresse - abzufragen.

## Patentansprüche

1. Verfahren zur Lokalisierung und zur ortsbezogenen Vermittelung eines Teilnehmers in einem Voice-over-IP-Netz zu einem Notrufzentrum, wobei der Teilnehmer zeitweise auch an einem anderen Standort als einer Heimatadresse registriert sein kann, wobei das Voice-over-IP-Netz eine Adressdatenbank umfasst, in welcher Adressen mit einer ortsbezogenen Nummer indiziert sind, wobei die Adresse des Standortes des Teilnehmers mit Hilfe eines in der Adressdatenbank abgelegten, vordefinierten Adressbereichs aktualisiert wird (2, 3), und wobei ein Notruf anhand der ortsbezogenen Nummer an ein zugeordnetes Notrufzentrum geroutet wird (6, 7, 8, 9, 10), **dadurch gekennzeichnet, dass** die ortsbezogene Nummer gemeinsam mit Daten des Teilnehmers an das zugeordnete Notrufzentrum übermittelt wird (8),
und dass dann im Notrufzentrum mit Hilfe der ortsbezogenen Nummer der aktuelle Standort des notrufenden Teilnehmers durch eine Abfrage der Adressdatenbank ermittelt wird (11),
wobei die ortsbezogene Nummer mittels einer SIP-Schnittstelle zu einem Mediagateway in einem P-Access-Network-Info-Header gemäß Request for Coment RFC 3455 übertragen (8) und die ortsbezogene Nummer vom Mediagateway auf einen ISUP-Parameter "Location Number" für eine Weiterleitung zum jeweiligen Notrufzentrum umgesetzt wird (9, 10).

2. Verfahren nach Anspruch 1, **dadurch gekennzeichnet, dass** die ortsbezogene Nummer über eine Mapping-Tabelle mit Informationen für die Weiterleitung zum jeweils zugeordneten Notrufzentrum verknüpft wird (7).

3. Verfahren nach einem der Ansprüche 1 bis 2, **dadurch gekennzeichnet, dass** als Vorinitialisierung die ortsbezogenen Nummer der Heimatadresse des Teilnehmers eingetragen wird.

4. Verfahren nach einem der Ansprüche 1 bis 3, **dadurch gekennzeichnet, dass** eine Aktualisierung der Adresse des jeweilig aktuellen Standortes des Teilnehmers über eine World-Wide-Web-Oberfläche durchgeführt wird (3).

5. Verfahren nach einem der Ansprüche 1 bis 4, **dadurch gekennzeichnet, dass** die eingegebene Adresse des jeweilig aktuellen Standortes des Teilnehmers mit einer Gültigkeitsdauer versehen wird, sofern diese von der Heimatadresse unterschiedlich ist.

6. Verfahren nach einem der Ansprüche 1 bis 4, **dadurch gekennzeichnet, dass** periodisch eine Bestätigung der Adresse des jeweilig aktuellen Standortes des Teilnehmers gefordert wird.

7. Verfahren nach einem der Ansprüche 1 bis 6, **dadurch gekennzeichnet, dass** die Adressdatenbank zentral oder dezentral im Voice-over-IP-Netz bereitgestellt wird.

8. Verfahren nach einem der Ansprüche 1 bis 7, **dadurch gekennzeichnet, dass** die ortsbezogene Nummer in einem Format der Empfehlung E.164 in der Adressdatenbank abgelegt wird.

## Claims

1. Method for localization and location-related relaying of a subscriber in a Voice-over-IP network to an emergency center, wherein the subscriber may intermittently also be registered at a location other than a home address, wherein the Voice-over-IP network comprises an address database in which addresses are indexed with a location-related number, wherein the address of the location of the subscriber is updated using a predefined address range stored in the address database (2, 3), and wherein an emergency call is routed to an associated emergency center using the location-related number (6, 7, 8, 9, 10), **characterized in that** the location-related number together with data from the subscriber is transmitted to the associated emergency center (8),
and **in that** the emergency center then uses the location-related number to ascertain the current location of the subscriber making the emergency call by querying the address database (11),
wherein the location-related number is transmitted by means of an SIP interface to a media gateway in a P-Access-Network-Info header based on Request for Comment RFC 3455 (8) and the location-related number is converted by the media gateway to an ISUP parameter "Location Number" for forwarding to the respective emergency center (9, 10).

2. Method according to Claim 1, **characterized in that** the location-related number is linked to information for forwarding to the respective associated emergency center by means of a mapping table (7).

3. Method according to one of Claims 1 and 2, **characterized in that** the preinitialization entered is the location-related number of the home address of the subscriber.

4. Method according to one of Claims 1 to 3, **characterized in that** the address of the respective current location of the subscriber is updated using a World Wide Web interface (3).

5. Method according to one of Claims 1 to 4, **characterized in that** the input address of the respective current location of the subscriber is provided with a validity period if it differs from the home address.

6. Method according to one of Claims 1 to 4, **characterized in that** confirmation of the address of the respective current location of the subscriber is requested periodically.

7. Method according to one of Claims 1 to 6, **characterized in that** the address database is provided centrally or locally in the Voice-Over-IP network.

8. Method according to one of Claims 1 to 7, **characterized in that** the location-related number is stored in a format from the recommendation E.164 in the address database.

## Revendications

1. Procédé de localisation et de commutation, en fonction de la localisation, d'un usager dans un réseau voix sur IP vers un centre d'appels d'urgence, l'usager pouvant également être enregistré temporairement à une localisation autre qu'une adresse nominale, le réseau voix sur IP comprenant une base de données d'adresses dans laquelle des adresses sont indexées par un numéro relatif à une localisation, l'adresse de la localisation de l'usager étant actualisée à l'aide d'une zone d'adresse prédéfinie déposée dans la base de données d'adresses (2, 3) et un appel d'urgence étant routé à l'aide du numéro relatif à la localisation vers un centre d'appels d'urgence associé (6, 7, 8, 9, 10), **caractérisé en ce que** le numéro relatif à la localisation est transmis conjointement avec des données de l'usager au centre d'appels d'urgence associé (8) et **en ce que** la localisation actuelle de l'usager émetteur de l'appel d'urgence est alors déterminée, dans le centre d'appels d'urgence, à l'aide du numéro relatif à la localisation par interrogation de la base de données d'adresses (11), le numéro relatif à la localisation étant transmis, au moyen d'une interface SIP, vers une passerelle média dans un en-tête P-Access-Network-Info conformément à la « Request for Comment RFC 3455 » (8) et le numéro relatif à la localisation étant converti par la passerelle média en un paramètre ISUP « Location Number » pour une retransmission vers le centre d'appels d'urgence respectif (9, 10).

2. Procédé selon la revendication 1, **caractérisé en ce que** le numéro relatif à la localisation est associé, par l'intermédiaire d'une table de mappage, à des informations pour la retransmission vers le centre d'appels d'urgence respectivement associé (7).

3. Procédé selon l'une des revendications 1 à 2, **caractérisé en ce qu'**est enregistré, en tant que préinitialisation, le numéro de l'adresse nominale de l'usager relatif à la localisation.

4. Procédé selon l'une des revendications 1 à 3, **caractérisé en ce qu'**une actualisation de l'adresse de la localisation respectivement actuelle de l'usager est effectuée par l'intermédiaire d'une surface World Wide Web (3).

5. Procédé selon l'une des revendications 1 à 4, **caractérisé en ce que** l'adresse saisie de la localisation respectivement actuelle de l'usager, dans la mesure où celle-ci est différente de l'adresse nominale, est pourvue d'une durée de validité.

6. Procédé selon l'une des revendications 1 à 4, **caractérisé en ce qu'**une confirmation de l'adresse de la localisation respectivement actuelle de l'usager est demandée périodiquement.

7. Procédé selon l'une des revendications 1 à 6, **caractérisé en ce que** la base de données d'adresses est mise à disposition centralement ou de manière décentralisée dans le réseau voix sur IP.

8. Procédé selon l'une des revendications 1 à 7, **caractérisé en ce que** le numéro relatif à la localisation est déposé dans la base de données d'adresses sous un format de la recommandation E.164.
